(19) Europäisches Patentamt
European Patent Office
Office européen des brevets

(11) Publication number: **0 481 941 B1**

(12) **EUROPEAN PATENT SPECIFICATION**

(45) Date of publication of patent specification: **01.03.95**　(51) Int. Cl.⁶: **F16B 15/00**, E04B 1/49

(21) Application number: **91850234.5**

(22) Date of filing: **26.09.91**

(54) **Connector plate assembly.**

(30) Priority: **05.10.90 FI 904925**

(43) Date of publication of application:
**22.04.92 Bulletin 92/17**

(45) Publication of the grant of the patent:
**01.03.95 Bulletin 95/09**

(84) Designated Contracting States:
**AT BE CH DE DK ES FR GB GR IT LI LU NL SE**

(56) References cited:
**GB-A- 1 287 739
US-A- 3 417 652
US-A- 3 841 195
US-A- 4 486 115
US-A- 4 639 176**

(73) Proprietor: **METSÄ-SERLA OY
Lohjan tehtaat,
P.O. Box 24
SF-08101 Lohja (FI)**

(72) Inventor: **Kairi, Matti Olavi
Lövinginkatu 3
SF-08100 Lohja (FI)**

(74) Representative: **Hammar, Ernst et al
H. ALBIHNS PATENTBYRA AB
P.O. Box 3137
S-103 62 Stockholm (SE)**

Rank Xerox (UK) Business Services
(3.10/3.09/3.3.3)

## Description

The invention relates to a double-sided connector plate assembly for joining two at least essentially wooden members, the assembly consisting of at least two essentially identical nail plates, each comprising a plurality of longitudinally spaced nails projecting from the nailfree side of each plate, which nails point away from the plane of the plate and have been formed by punching and bending from this plate, whereby the openings left by the punching of the nails and the longitudinally spaced nails form lines of nails, and there is a plurality of such transversely spaced lines of nails in the plate, and all the nails arranged in one nail plate point to the same side of the plane of the plate, and of the two nail plates of the connector plate assembly, the nails of the first nail plate and the nails of the second nail plate form nail pairs, as well as a butt joint carried out by means of this connector plate assembly and a tool for assembling the connector plate assembly of the nail plates.

Several types of connector plates or nail plates for joining essentially wooden members are known. The most general structure consists of a metal sheet in which nails have been punched and bent perpendicularly to the sheet. Such nail plates, in which all the nails point in one direction of the plate, are struck onto the wooden members when the wooden members have been disposed to form the shape of the desired joint. In optimal cases, the nails of these nail plates are toothed in order to improve the grip, and have been disposed in longitudinal concavity to improve the stiffness of the nail when it is being struck into the wood, as it has been disclosed by the FI patent specification 65643. This type of nail plates provide a sufficient joint strength for many purposes of use and they are easy to use. If noticeable strength is required of the joint with regard to other than tension and compression strength, particularly with regard to torsion, and especially if fire safety is required of the joint, other types of structures have to be used, since the metal part on the surface of the member conducts heat from the surface into the wooden structures during combustion, thus accelerating carbonization, and such a structure does not comply with safety regulations.

The problem described above can be solved by using double-sided connector plates or nail plates. In this case, the wooden members to be joined consist respectively of at least two pairs of wooden members, the double-sided connector plate being interposed between them. For instance a timber joist will then consist of two timber members, placed longitudinally parallel with one of their surfaces facing each other. Such a timber is formed or joined to another timber or other timbers by a connector plate, which extends sufficiently far into the area of each timber to be joined to provide the required strength, and inbetween the two timber members of each timber, but at least not significantly outside the interface between the timber members. With this arrangement, no significant metal surface will be apparent.

There are also several embodiments of such double-sided connector plates. Such a structure is described in the FI patent specification 74319, in which the connector member is formed by a nailfree thick and strong frame plate, on each side of which nail plates made of a thinner material by punching and bending have been attached with their nailfree side facing the frame plate. Thus, a connector plate assembly has been achieved, which has a great strength in the direction of the plate and a high nail density. However, such a connector plate assembly requires the mastering of several production techniques and a number of production steps. Possible errors in these will cause the connector plate assembly to break under too small a load. The same problems are even more accentuated in connector plates, in which the nails have been directly welded to the frame plate, because there is a more marked point-wise distribution of the load in these.

A different double-sided connector plate assembly has been described in the US patent specification 3 841 195. The assembly consists of two nail plates, both of which have been manufactured from a metal sheet by punching and bending nails projecting from it. In both the nail plates, the nails are all directed to the same side of the metal sheet. The connector plate assembly has then been accomplished by assembling these nail plates with their nailfree backs facing each other and by welding the plates together at the openings left by the punching. A welding of this kind is a complicated operation and makes the plate expensive. The plate also has a poor strength or at least unreliable strength properties, since the local weldings break easily under the heavy load they are submitted to. For instance, the nail plates may shear from each other along the plane between them, since only the welds support the load in that direction. A more serious drawback occurs when the load acts on the nail inserted into the wood, and there are deformations of the nail plate, such as a deflection in the environment of this nail. This is due to the fact that the welds joining the nail plates are at a distance from the nails, so that the nail points do not fit tightly. On the other hand, it is technically difficult and expensive to arrange the welds at the root of each nail in order to retain it on the opposite surface of the nail plate. It is also difficult to press the connector plate assembly inbetween the wooden members, since the wooden portion is flexible at each nail, whereby the joint tends to open up slightly after pressing. The joint thus achieved will not be tight and yields still poorer strength.

A structure having a better strength than the one described above is disclosed by the US patent specification 4 486 115, in which the connector plate assembly consists of two nail plates, as above. The nail plates have been formed by perforating and bending projecting nails from a metal sheet, and the nails point only to the one side of the plate. Separate holes have also been punched in the nail plate, the arrangement of the holes corresponding to that of the nails and the holes having such dimensions that the nails pass easily through the holes without however allowing any considerable play. Subsequently, the connector plate assembly has been formed from these two nail plates by interlocking them with the surfaces on the side of the nails facing each other, whereby the nails pass through the said holes of the other nail plate and project from the nailfree side of it. This connector plate assembly has an excellent strength with regard to the shearing described above, since a shearing along the plane between the nail plates would require that all the nails break. In fact, such a connector plate assembly is strong when submitted to tensile and compressive stress, but extremely weak with regard to bending and especially to torsion. Further, the nail density will be very low in the described structure, since the holes occupy the area of the plate, and thus the adhesion to the wooden members will be poor. The described structure also necessarily involves the inconvenience of the plate portion being loosely fitted at each nail when the connector plate assembly is being pressed between the wooden members, so that the joint tends to open up slightly after the compression. In this structure, the problem is even more serious than in the case of the US patent specification 3 841 195, since the plates have not been attached to each other, but both the plates may deform regardless of each other.

A connector plate similar to that disclosed in US 4 486 115 is described in GB-A 1 287 739. The connector comprises a plate formed with teeth pressed out from the plate on one side only, and slots other than the holes left by the teeth. The slots and teeth are arranged such that two similar plates can be coupled together with the teeth of each plate passing through the slots of the other plate, to form a combined connector with teeth on opposite sides.

It would be possible to imagine the manufacture of a double-sided connector plate directly from one plate by punching and bending the nails on both sides of the plate. However, this would yield a very low nail density and a poor adhesion to the wooden members. It would also involve a complicated production technique, and hence a high price.

Consequently, the object of the invention is to provide a double-sided connector plate assembly, which is very resistant to tactile, compressive, flexural and torsion stress, and which permits to arrange as high a nail density as is generally possible by punching and bending. The object of the invention is also a connector plate assembly, which transfers the loads to the plate portion efficiently and without breaking and in which the plate portion has a good total strength. Further, the object of the invention is a connector plate assembly, in which there is essentially no deformation of the plate portion, or a very slight deformation at each nail, when the connector plate assembly is being pressed inbetween the wooden members. Also, the object of the invention is to provide a connector plate assembly of the type described above, which is easy to manufacture at a low cost. Finally, the object of the invention is to provide a tool, by means of which the connector plate assembly of the above type can be easily, rapidly and reliably assembled ready for use, and to achieve a perfectly strong joint that provides fire safety.

The objects defined above are achieved and the problems described are solved by a connector plate assembly, which is characterized by the features defined in the characterizing part of claim 1, by a joint using this connector plate assembly, which is characterized by the features defined in the characterizing part of claim 12, and by a fixing tool, which is characterized by the features defined in the characterizing part of claim 14.

The invention will be described in further detail below with reference to the enclosed drawings.

Figures 1A and 1B show a cross-section of one embodiment of the connector plate assembly according to the invention along the lines A and B respectively of the nail plate in figure 2.

Figure 2 shows a nail plate produced by the connector plate assembly of figures 1A and 1B seen from the toothed side towards its surface.

Figures 3A and 3B show a cross-section of another embodiment of the connector plate assembly according to the invention along the lines C and repsectively D of the nail plate in figure 4.

Figure 4 shows the nail plate produced by the connector plate assembly of figures 3A and 3B seen from the toothed side towards its surface.

Figure 5 shows the structure of figure 1A in the assembling stage of the nail plates.

Figure 6 shows the connector plate assembly of figures 1A and 1B in the same perspective as in figure 2.

Figure 7 shows a nail plate produced by a third embodiment of the connector plate assembly according to the invention seen from the toothed side towards its surface.

Figure 8 shows the connector plate assembly carried out with the nail plate of figure 7, in the same perspective.

Figure 9 shows a detail of the joint area between the nail root and the plate portion in one embodiment of the invention seen in the plane II-II of figure 10.

Figure 10 shows a detail of figure 9 along the plane I-I of figure 9.

Figure 11 shows an axonometric view of the press member of the fixing tool according to the invention.

Figure 12 shows a fire-safe butt joint according to the invention perpendicularly to the plane of the connector plate.

Figure 13 shows a nail plate produced by a fourth embodiment of a connector plate assembly according to the invention, seen from the toothed side towards its surface.

Figure 14 shows a cross-section of a connector plate assembly carried out with the nail plate of figure 13 along the line $K/L'-K/L'$ of figure 15.

Figure 15 shows the connector plate assembly carried out with the nail plate of figure 13 in the same perspective.

Figure 16 shows a detail of another preferred embodiment of the nail intended for the connector plate assembly according to the invention.

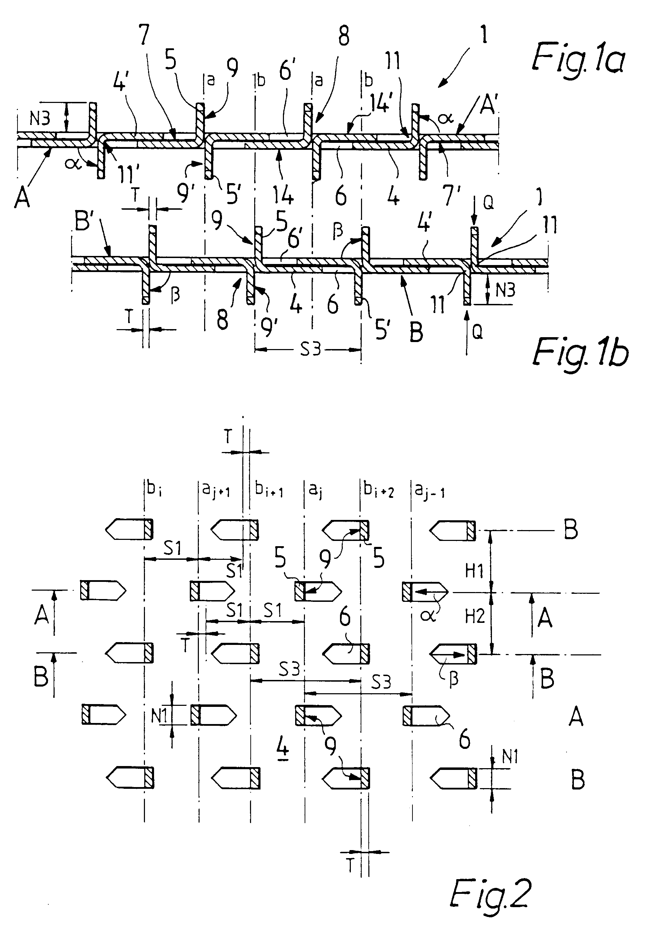

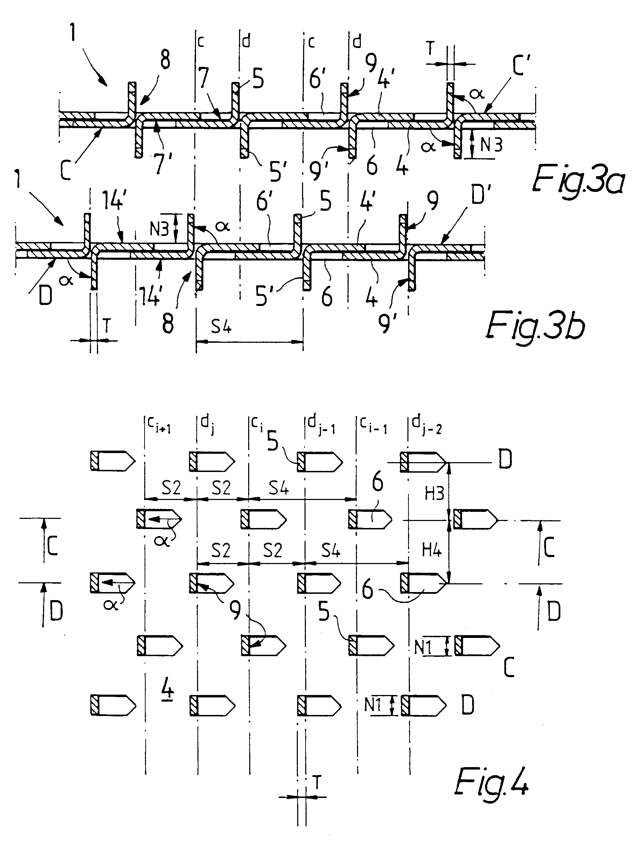

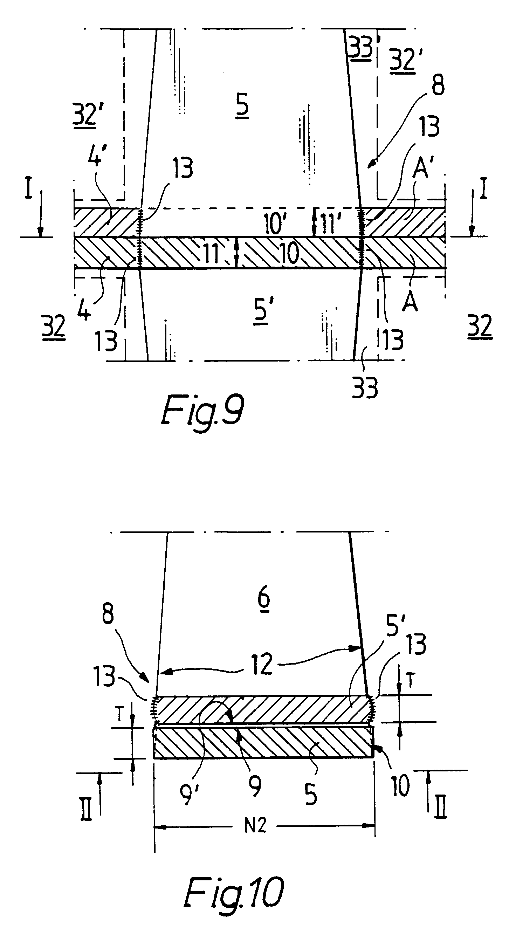

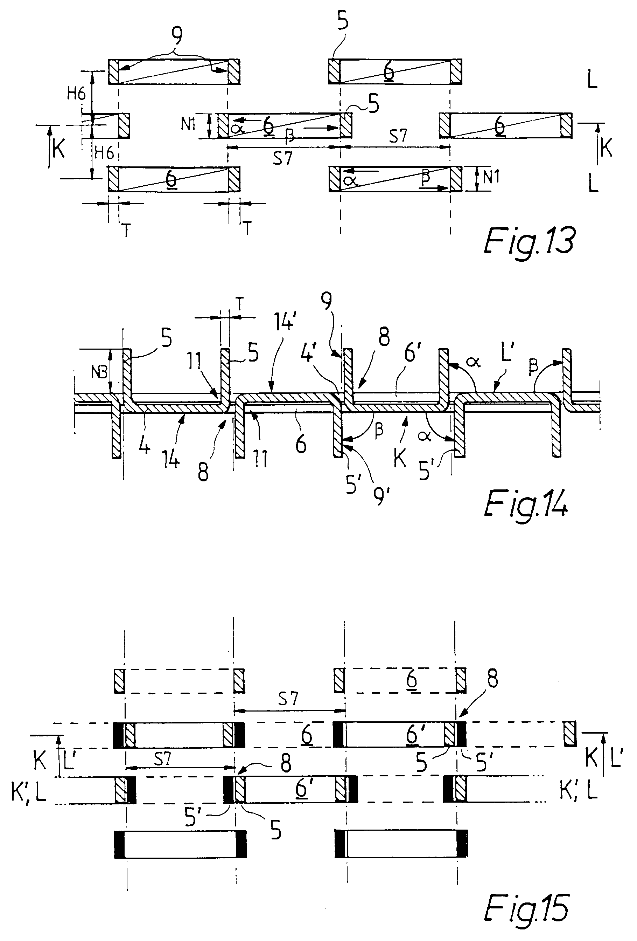

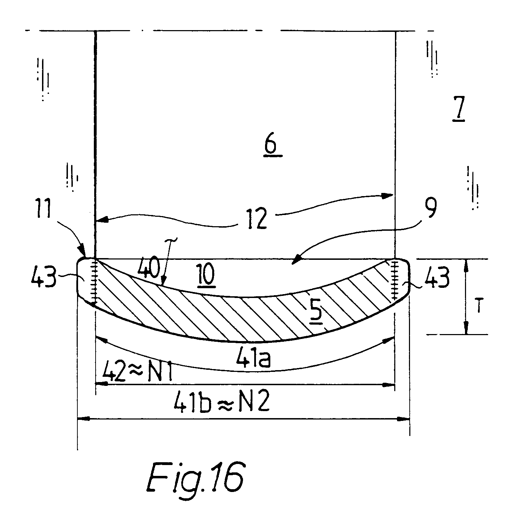

A closer look at figure 2, figure 4, figure 7 and figure 13 shows the nail plate 4, which is formed by a metal and typically steel sheet, from which nails 5, shown by oblique lines, have been perforated and bent in a manner known per se. In these figures, the nail plate 4 has been illustrated from the toothed side, i.e. the nails 5 point upwards. Thus, the position of the nail plate in figure 2 corresponds to the lower nail plate 4 of the connector plate assembly in figures 1A and 1B, in which the nails point upwards and the nail plate of figure 4 corresponds to the lower nail plate 4 of the connector plate assembly of figures 3A and 3B, in which the nails also point upwards, and likewise the nail plate of figure 13 corresponds to the lower nail plate 4 of the connector plate assembly of figure 14. The figures show that the perforation and bending of the nails has left nail-shaped openings 6 in the plate portion. In figures 1A-8 and 13-15 the nails and the openings are presented only with regard to their positioning, their shape not complying with the preferred embodiments of the invention, which appear in figures 9, 10 and 16. The width of the nails is indicated with reference N1 and their thickness with reference T. The thickness T is essentially equal to the thickness of the plate material, if the nail has a straight cross-section as shown in figure 10, but has a greater maximal dimension if the nails are shaped with a curved or similar cross-section. The rear 9 of the nail is the side of the nail pointing to the opening left by the bending of the nail.

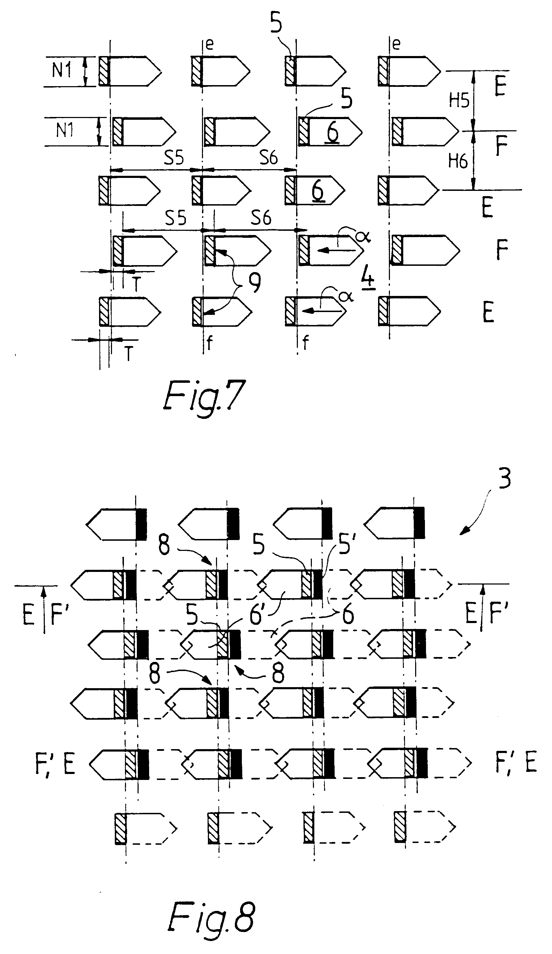

The nails 5 may be bent counter clock-wise, i.e. in the bending direction $\alpha$ , as all the nails in figures 4 and 7 and about half of the nails in figures 2 and 13, or clockwise, i.e. in the bending direction , as the other half of the nails in figures 2 and 13. These bending directions have been marked also in figures 1A, 1B, 3A, 3B, 5 and 14 as well as the nail plate 4, the nails 5 and the openings 6. The surface of the nail plate that is on the toothed side is marked by reference 7 and the nailfree side with reference 14. The embodiment of figures 4 and 7 may of course be such that all the nails are bent in the direction $\beta$ , i.e. clock-wise.

In the nail plate, the nails 5 and the openings 6 left by their perforation and bending typically define nail lines, as lines A and B in figure 2, lines C and D in figure 4 and lines E and F in figure 7, as well as lines K and L in figure 13. In most cases, the nails of each line are always bent in the one bending direction. In figure 2, the nails of the first line A are bent in the direction $\alpha$ and the nails of the other lines B are bent in the direction $\beta$ , and moreover, the lines A and B alternate transversely to the line direction, spaced by intervals H1 and H2, which generally are equal. Usually the nails 5 are equally spaced S3 in the line direction, regardless of the line.

Figure 4 and figure 7 also show mutually displaced lines C and D and respectively lines E and F. In the embodiment of figure 4 the interspaces S4 of the nails 5 in the line direction are also mutullay equal, as are the interspaces H3 and H4 of the lines. The lines C and D differ from each other only in that in the respective line, the nails are placed at different points in the line direction S4 according to a regular pattern. In the embodiment of figure 7, the interspaces S5 and S6 of the nails 5 in the line direction are generally also mutually equal as are also the interspaces H5 of the lines. The lines E and F also differ from each other only in that in the respective line, the nails are placed at different points in the line direction S5, S6 according to a regular pattern.

Figures 13 and 14 show an embodiment of the invention, in which the nails 5 and the openings 6 left by them define lines K and L, in both of which the nails are alternately bent in the direction $\alpha$ and the direction $\beta$ . In the embodiment shown, at least two nails are perforated and bent in opposite directions leaving a common opening 6, as shown in figure 13 and also in figure 14. However, this is not necessary, although it is advantageous. In this case, the nail openings of the adjacent lines K and L alternate, but they may also be disposed essentially matching each other in a manner not represented. The interspaces H6 of the lines K, L are preferably mutually equal and the interpaces S7 of the nails in the line direction are equal in all the lines in this case.

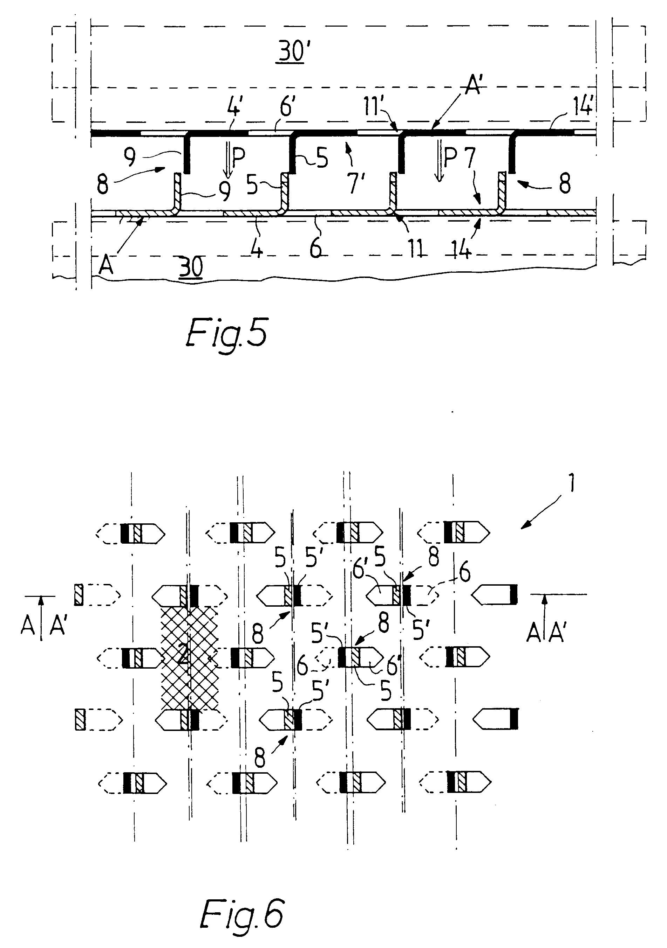

The other, i.e. the first nail plate 4 of the connector plate assembly and its elements are marked with usual numerals or letters in the figures, as in figures 2, 4, 7 and 13, in which the nail plates correspond to the lower nail plate of the section views 1A, 1B, 3A, 3B, 5 and 14. The second, i.e. the upper nail plate 4' of the connector plate assembly 1 and its elements are marked with numerals and letters with an apostrophe, having the same significations as the above references without apostrophes, except that they represent the upper, turned nail plate in the section views mentioned above. Thus, reference 5' denotes a nail of the upper nail plate, reference 6' an opening of the upper nail plate, reference 7' the surface on the toothed side of the upper nail plate etc. in the respective views of the connector plate assembly. Thus, references with apostrophes are also used to denote parts of the upper nail plate 4' in figures 6, 8, 9 and 10, as well as 14 and 15. According to the invention, two interconnected nail plates 4 and 4' are preferably identical, they are in fact the same nail plate, which can be manufactured for instance on a production line and from which two or more pieces are taken for instance by cutting in order to form the connector plate assembly. In this case, the position and the bending direction of the nails must comply with specific rules in each case so that the nails 5 and 5' pass through the other nail plate according to the invention.

The configuration and properties of the connector plate assembly according to the invention are examined below with the aid of figures 1A, 1B, 2, 5 and 6, which all represent the same preferred embodiment. The connector plate assembly is formed by using two nail plates 4 and 4' according to figure 2. The second nail plate 4' is swung on top of the first nail plate 4 so that their nails 5 and 5' point towards each other, as shown in figure 5, which is a section of the plane A/A'-A/A' of figure 6. The elements of the second nail plate 4' are illustrated in black, whereas the elements of the first nail plate are represented by oblique lines, as also in figure 6. In this embodiment of the invention, the nail plate 4 and the nail plate 4' are mutually positioned so that the lines A of the lower plate 4 coincide with the same lines A' of the upper plate 4' and respectively, the identical lines B and B' coincide. In the original plate coming from the production line, lines A and A' correspond to the same bending direction $\alpha$ and lines B and B' to the same bending direction $\beta$. In this manner, there is no displacement in the width direction H1, H2 between the upper and the lower nail plate, signifying also that the spaces H1 and H2 between the lines do not necessarily have to be equal, even if this is usually a practical solution.

According to the invention, the nails 5' of the upper nail plate are respectively positioned with regard to the nails 5 of the lower nail plate so that their rears 9' are at least essentially in the same plane as the rears 9 of the nails 5, or the rears 9 and 9' are at least positioned close to each other. Moreover, the upper nails 5' pass through the perforations 6 of the lower nails and respectively, the lower nails 5 pass through the perforations 6' of the upper nails. When the upper plate 4' is pressed by means of the two press members 30 and 30' of the invention in the direction of the arrow P tightly against the lower plate 4 so that the surface 7' on the side of the nails of the upper plate is pressed tightly against the surface 7 on the side of the nails of the lower plate, the result is the finished connector plate assembly 1, in which the nails 5' of the upper nail plate 4' project as effective nails with the length N3 from the nailfree surface 14 of the lower nail plate and respectively, the nails 5 of the lower nail plate 4 project as effective nails with the length N3 from the nailfree surface 14' of the upper nail plate. The section of the finished connector plate at the point of the nail lines A and A' is shown in figure 1A and at the point of the nail lines B and B' in figure 1B, and as a schematic top view perpendicularly to the surface 14' in figure 6. This set-up yields nail pairs 8 in the connector plate assembly. Each nail pair 8 denotes the two nails 5, 5' passing through each other's perforations 6', 6 and the rears 9, 9' of which are essentially in the same plane or close to each other, as shown in figures 1A, 1B and in figure 6 at the nail line A/A'.

The advantage provided by the nail pairs 8 is that, when the connector plate assembly is being pressed for instance between two wooden members on the working site, no deformation of the plate portions is allowed, since a nail is provided essentially at the same point on the other side of the connector plate assembly. In this way, the opposite forces excercised through the nails compensate each other and the plate portion between the nails 5. 5' are not subject at least to any significant moment which would bring about a deformation. This matter is easy to understand by studying figures 1A and 1B. Supposing that the nails are subject to a pressure Q from both sides towards the interface 7, 7', this would result in the bent root portions 11 and 11' of the nails (cf. figure 9) bearing on each other, and no deformation would occur in the plate area 2 between the nails (lined area in figure 6). The second clearly observable advantage is the high nail density, since already existing openings are taken advantage of in the structure, so that the plate surface does not have to serve additional purposes.

The structure according to the invention described above can be carried out by many different nail positioning patterns on the plate surface, provided that the nail pairs 8 are produced in the manner described above, the nail plate being swung as a mirror image on itself about one lateral direction. In this connection, a reasonable lateral displacement in one direction of the interface 7, 7' is always allowed.

In the embodiment of figures 1A, 1B, 2, 5 and 6, the positioning pattern has to fulfil the definition described below, supposing that the nails form rows in identical lines A and respectively B, i.e. they are arranged according to a repeated pattern. If the nails in the first line A form first rows a perpendicular to the line direction S3 and the nails in the second lines B form second rows b perpendicular to the line direction S3, the rears 9 of the nails in each first row a should be aligned along a line placed in the middle of the distance 2*S1; this distance is formed between two consecutive rows of the second rows b, the distance being measured from the rear 9 of the nails of one nail row $b_i$ of the second lines B through the nail 5, to a point which is at least essentially at a distance equal to the nail thickness T from the rear 9 of the nails of the following nail row $b_{i+1}$ in this line direction towards the said preceding nail row $b_j$. Analogously, in each second row b, the nail rears 9 should be aligned along a line b, which is placed in the middle of the distance 2*S1, formed between two consecutive rows of the first rows a, the distance being measured from the rear 9 of the nails in one nail row $a_j$ of the first lines A through the nail to a point, which is at least essentially at a distance equalling the nail thickness T in this line direction from the rear of the nails of the following nail row $a_{j+1}$ towards the said preceding nail row $a_j$. Thus, both the first and the second rows a, b are at a point that fulfils the definition S1 = (S3 -T)/2, as is clearly shown in figure 2. The subscripts, which indicate the direction, grow in numeric value towards the bending direction $\alpha$ or $\beta$ in each nail line, i.e. in the direction perforation opening - bent nail. Here and in the following, the subscripts i and j denote any row and i±n or j±n any row placed at a different point than these in accordance with the growth rule for the subscript mentioned above.

According to the invention, the strength of the connector plate assembly 1 is further enhanced by the strong grip between the bent root of the nails 5, 5' and the matching opening 6', 6, which is explained in connection with figures 9, 10 and 16. According to the invention, the nails 5 and 5' have for instance a tapered shape from the bending point 10, 10' towards the point of the nail, whereby the openings 6, 6' left by them in the nail plate are also tapered beginning from the bending point. As the nails 5 and 5' of the nail pairs 8 pass through the openings 6' and respectively 6 mutually left by them, the root portion 11, 11' of the penetrated nail is compressed between the tapering sides 12 of the opening. This is especially seen in figure 10, in which the edges of the nail 5' of the upper nail plate 4' are pressed between the sides 12 of the opening 6 of the lower nail plate 4, whereby a deformation area 13 arises at the point of contact between the opening and the opening sides, the deformation area interlocking the nail of the first plate and the second plate undetachably. Analogously, the nail 5' of the second plate is undetachably connected to the first plate 4. In this way, each nail pair 8 connects the first and the second nail plate in four deformation areas 13, as is shown in figure 9. Another design which produces a particularly strong grip involves the use of a nail having a curved cross-section, which is shown in figure 16, this curvature being accomplished in accordance with a specific production method. A nail 5 having a curved cross-section, for instance a coved rear 9, is formed in the nail plate 4 or 4', by pressing, directly from the sheet of raw material, curved teeth projecting from the plate surface and extending continuously or at least to the area of the nails to be formed. They are of course protrusions on one side of the plate and recesses on the opposite side, the curvature of which is perpendicular to the length of the nail. After this, the punching and bending of the nail are carried out normally, in the manner described in the FI patent specification 65643 mentioned above. However, the bending causes the curvature 40 to straighten out (not represented in the above patent specification) from the bending point 10, 10' of the root portion 11, 11' of the nail (cf. e.g. figure 9). When the curved dimension 41a is straightened, the result is an identical straight dimension 41b, the length of which is the same, but of course greater than the dimension 42 of the span of the curved portion, which equals at least essentially the width N1 presented in the other figures. This appears in figure 16, in which the dilatation is marked with reference 43 and has the dimension approx. (dimension 41)-(dimension 42). The distance between the sides 12 of the opening 6 does not of course change, and hence, as such a nail 5 and 5' with a straightened curvature at its root 11 or 11' is being pressed into the opening 6' and 6, which retains its initial width, deformation areas arise between the root portion of the nail and the opening sides 12, these areas interlocking the nail plates undetachably at the nail pairs 8, as described above.

Although both a slightly tapered and the above curved shape of the nail are evidently the most efficient shapes for connecting the nail plates, slight deformation areas also arise between the uniform nails and the edges of the uniform holes, probably because the punching and the bending of the nail produce a plastic deformation of the root portion 11,11′ of the nail precisely at the bending point 10, 10′, causing the root portion to widen. This widening or similar bring about the deformation areas 13 between the nail and the edges of the opening. In other words, the compression and the strength of the joint are enhanced by a deformation caused in the root portion by the bending of the nail. Thus, the nail pairs according to the invention bring about an undetachable connection of the nail plates 4 and 4′ into a connector plate assembly 1. It is obvious that the forcing of nails between the sides of the opening 6 or 6′ can be obtained by many other designs, such as barbed nails, an undulated shape or similar. The same designs of the nail sides can be used for improving the grip of the nail with the wooden structure, for instance in analogy with the design of shanked nails.

Figures 3A, 3B and 4 illustrate another positioning pattern of the nails, by means of which the connector plate assembly according to the invention is obtainable. Hypothetically, the nails form rows, i.e. are arranged according to a repeated pattern in identical lines C and respectively D. The connector plate assembly 1 is formed by the two nail plate members 4 and 4′ by swinging the nail plates having an identical nail pattern on top of each other, with the first lines C and C′ in matching alignment and the second lines D and D′ in matching alignment, whereby the nails of the first lines C and C′ together form the above nail pairs 8 and the nails of the second lines D, D′ together from the above nail pairs 8 (as in the case of the above figures 1A, 1B and 2 respectively in lines A, A′ and B, B′). In this case, if the nails in the first lines C form first rows c perpendicular to the line direction S4 and the nails in lines D form second rows d perpendicular to the line direction S4, the rears 9 of the nails in each first row c should be aligned according to a line $c_i$, which is placed in the middle of the distance 2*S2 formed between the rears 9 of the nails of two consecutive rows $d_j$ and $d_{j+1}$ of the second rows, and in each second row d, the rears 9 of the nails should be analogously aligned according to a line $d_j$, which is placed in the middle of the distance between the rears of the nails of two consecutive rows $c_i$ and $c_{i+1}$ of the first rows. In this case, both the first and the second rows c and d are at a point that fulfils the definition $S2 = S4/2$. The subscripts follow the same direction rule as presented above.

Figures 7 and 8 illustrate a third positioning pattern of the nails, by means of which the connector plate assembly according to the invention is obtainable. Hypothetically, the nails form rows, i.e. are arranged according to a repeated pattern in identical lines E and respectively lines F. The connector plate assembly is formed of the said two nail plates 4 and 4′ by swinging two nail plates having an identical nail pattern on top of each other, with the first lines E in matching alignment with the second lines F and the second lines F in matching alignment with the first lines E, whereby the nails of the first and second lines E and F together form the above nail pairs 8, and the nails of the second and the first lines form analogously the above nail pairs 8. In this case, if the nails in the first line E form first rows e perpendicular to the line direction S5, S6, and the nails in the second lines F form second rows f perpendicular to the line direction, the rears 9 of the nails in each first row e should be aligned along a line placed at least essentially at a distance equalling the nail thickness T from the rear 9 of the nails of the second row f outwards from the nail, and analogously in each second row f, the rears of the nails are aligned along a line, which is placed at least essentially at a distance equalling the nail thickness T from the rear 9 of the nails of the first row e in the direction of the nail thickness. Figure 8 shows this connector plate assembly. It can be noted that contrary to the two preceding embodiments, the second nail plate 4′ has been displaced over one line space H5 transversely to the first nail plate 4.

Thus, two embodiments have been described above, in which the second nail plate has been swung on top of the first one with the nail lines kept in alignment, the one nail plate having different bending directions in alternating nail lines and the second nail plate having the same bending direction in each line, and one embodiment, in which all the nail lines have the same bending direction, but the lines are transversely displaced with regard to their alignment. The invention is not limited to these embodiments. Thus, for instance, in each nail line, the nails may be alternately bent in a first and a second direction, whereby in each line, the spaces between the nail rears in the line direction vary periodically depending on the bending direction, or are equal, the transverse spaces between the nail lines being usually equal. Figures 13-15 show such an optional embodiment, in which a second nail plate 4′ of the described type is swung on top of a first nail plate 4 so that the lines L′ of the second nail plate are aligned with the nail lines K of the first nail plate, forming the nail pairs 8, and the nail lines K′ of the second plate are aligned with the lines L of the first plate, forming also nail pairs 8. The assembling method is thus the same as in the case of figures 7 and 8. A nail positioning pattern of this type can of course be conceived, in which the nails are alternately or otherwise bent in the direction $\alpha$ and $\beta$, in each respective line, but in which each line is turned back on itself. The aspect of the nail line will however be different than the one shown in the figure. Other options for the nail pattern can be easily invented. These patterns may be complicated and have an irregular aspect, however the simple patterns described above are most often the most practical ones.

In an ordinary nail plate the nails 5 are bent so as to be perpendicular to the surfaces 7 and 14 of the nail plate. This is a useful and often the most economic method even for the connector plate assembly according to the invention, the nails 5 and 5' being also perpendicular to the surfaces 14' and 14. A further version of the above connector plate assembly comprises an option, in which the nails are not perpendicular to the plate surfaces 7 and 14. The nails may be for instance inclined in different directions in alternating lines. In the positioning pattern of figure 2, it can be supposed that the bending angles $\alpha$ , as well as the bending angles $\beta$ differ from the value 90°, being preferably somewhat smaller, whereby nail rows a and b are formed, having nails inclined towards each other or away from each other. The connector plate assembly is then affected so that the space 9 and 9' between the nail rears in the nail pairs 8 increases slightly, and thus they are no longer in the same plane but close to each other. The space is however small compared to solutions in prior art, so that no deformation can be observed. This structure has the advantage of an excellent grip, for instance to laminated wood. If again, the inclination is arranged in one direction on the nail plate, the nail plates can be pressed together obliquely in a corresponding angle, and this arrangement enables to make the nails 5 and 5' of the nail pairs 8 at least nearly coincide, in other words, the opposite nails would be fully aligned in a manner not represented in the figure, and not merely with their rears 9 and 9' tangentially aligned, as shown in the figure.

The nails can obviously comprise any forms known per se or similar on any surface, for instance to provide a better grip with wood. It should also be noted that the cross-section of the nails can have another shape than the rectangle or curved rectangle described. In this case, the effective surface, along which the nails can move longitudinally with regard to each other in the described manner, should be interpreted as the rears 9, 9' of the nails, and consequently as their mutual plane. An analogue interpretation is appropriate if the nails are not perpendicular to the plate surface. Generally, the nails 5 and 5' of the nail pairs 8 are close to each other according to the invention, this proximity usually meaning a measure of the order of one or a few material thicknesses or nail thicknesses in the line direction.

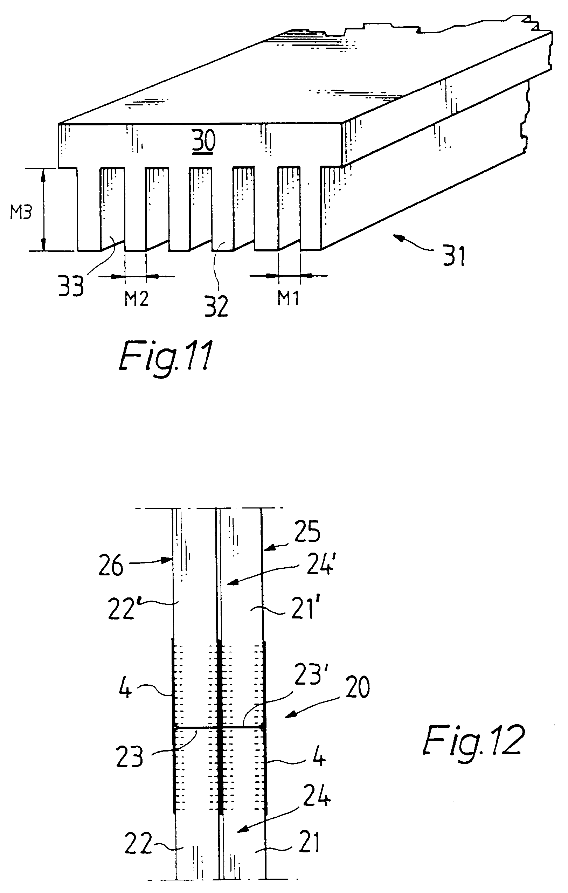

Figure 11 shows a press tool 30 according to the invention, used as a tool at least when the nail plates 4 and 4' are being joined. Two such press tools, i.e. 30 and 30' are then used. One press tool consists of one whole piece, which may be of hard wood, plastic or metal, or in which one side 31 is formed of alternating ridges 32 and grooves 33. The width M2 of the ridges is equal or slightly smaller than the space H1, H2, H3, H4, H5, H6 between the axes of the nail lines of the present nail plate, from which the width N2 of the root portion of each respective nail is substracted. Thus, the ridges 32 or 32' pass inbetween the nail lines, as shown in figure 9, in which the press tools are indicated with dotted lines. The widths M1 and depths M3 of the grooves are equal or greater than the width N2 of the root portion of the nails, and respectively the length N3 measured from the free surface 14 or 14' of the connector plate assembly 1. When the nail plates are being pressed together, the nails 5 or 5' pass in the grooves 33 or 33', as shown in figure 9. One press tool can be used for pressing the additional nail plate described below into the wooden structures, but primarily two press tools are used for assembling the connector plate assembly. The nail plates 4 and 4' described above are pressed together between the two press tools, as shown as a lateral view in figure 5, where the press tools are also illustrated with dotted lines. The final situation of the pressing is represented as a cross-section in figure 9. Designing and dimensioning the press tools to match the nail plates is an essential feature, since the above compression deformation areas 13 require an accurate production step without generating any play.

Figure 12 shows an advantageous and fire-safe joint 20 obtainable with the connector plate assembly according to the invention. This is a butt joint, which has tensile, compression, bending and torsion strengths in a class of their own compared to strengths obtained by conventional connector plates. A joint of this type is generally not even carried out by using a nail plate, precisely because of the insufficient strength. The butt joint connects two timbers 24 and 24', each of which consisting of two timber members 21, 22 and respectively 21', 22'. In this joint 20, the connector plate assembly extends to the side of the first timber 24 so that the members 21 and 22 forming the timber are pressed on both sides of the connector plate assembly as the nails 5, 5' are embedded in these wooden members by their entire length N3. The connector plate assembly extends analogously to the side of the second timber 24', so that the wooden members 21' and 22' are pressed on both sides of the connector plate assembly as the nails 5, 5′ are inserted in these wooden members by their entire length N3. The ends 23 and 23′ of the timbers 24 and 24′ abut on each other and the connector plate assembly extends from this point essentially equally far in the direction of each timber. In order to achieve fire-safety, the width of the connector plate assembly perpendicularly to the the length of the timbers 24 and 24′ and the ends 23 and 23′ is smaller than the width of the timbers in this direction, the nail lines being generally at least essentially parallel to the said length. When needed, additional nail plates are pressed on both the lateral surfaces 25 and 26 of the timbers, the additional nail plates being preferably of the same type as the nail plate forming an element of the used connector plate assembly, as its nails are embedded in the wooden members by its entire length, which in this case is N3 + T.

The invention has been schematically described in the above description and figures. The following data can be provided as an example of practical dimensioning for a connector plate assembly. The material thickness T of the nail plate can be e.g. c. 1 mm, the width of the nails c. 3 mm, the length of the nails c. 15 mm, the spaces between the nail lines c. 10 mm and the spaces between the nail rows c. 12 mm on the average. The dimensioning and the measures may of course vary considerably depending on the purpose of use.

## Claims

1. Double-sided connector plate assembly (1) for joining at least two members essentially of wood, the assembly consisting of at least two essentially identical nail plates (4, 4') with the surfaces (7, 7') on the side of the nails (5, 5') facing each other, each nail plate comprising a plurality of longitudinally spaced nails (5, 5') projecting from the the nailfree side (14, 14') of each plate (4, 4'), which nails point away from the plane of the plate (4, 4') and have been formed by punching and bending from this plate, whereby the openings (6, 6') left by the punching of the nails and the longitudinally spaced nails form nail lines (A, B; C, D; E, F; K, L) and there is a plurality of such transversely spaced (H1, H2; H3, H4; H5; H6) nail lines in the plate and all the nails in one nail plate point to the same side of the plane of the plate and of the two nail plates (4, 4') of the connector plate assembly (1) the nails (5) of the first nail plate and the nails (5') of the second nail plate form nail pairs (8), characterized in that the nails (5) of the first nail plate (4) extend through the openings (6) left by the punching of the nails (5') of the second nail plate (4') and analogously, the nails (5') of the second nail plate (4') extend through the openings (6') left by the punching of the nails (5) of the first nail plate (4), and in that the nails (5 and 5') of the first and the second nail plate extend through the mutual openings (6 and 6') left by the punching into opposite directions, in which the rears (9 and 9') of the nails thus face each other and are at least essentially in the same plane or close to each other.

2. Connector plate assembly according to claim 1, **characterized** in that in each nail line (A, B; C, D; E, F), the nails are bent in the same, first ($\alpha$) or second ($\beta$) bending direction, in that the interspaces (S3; S4; S5 and S6) between the rears (9, 9') of the nails are preferably equal in each nail line and/or the transverse interspaces (H1 and H2; H3 and H4; H5) between the nail lines are preferably equal.

3. Connector plate assembly according to claim 1, **characterized** in that in each nail line (K, L), the nails (5) are alternately bent in the first ($\alpha$) and the second ($\beta$) direction, whereby in each line, the interspaces between the rears (9) of the nails in the direction of the nail lines (S7) vary periodically depending on the bending direction or are equal (S7), and/or the transverse interspaces (H6) between the nail lines are preferably equal.

4. Connector plate assembly according to claim 2, in which in the transverse direction, parallel lines of the nail plate (4 or 4') have the nails alternately bent in the first lines (A) in a first direction ($\alpha$) and in the second lines (B) in a second direction ($\beta$), **characterized** in that the nails in the first lines (A) form first rows (a) transverse to the line direction (S3) and the nails in the second lines (B) form second rows (b) transverse to the line direction (S3) and in that in each first rows (a), the nail rears (9) are mutually aligned along a line (a), which is placed in the middle of the distance (2*S1) formed between two consecutive rows of the second rows (b), the distance being measured from the nail rears (9) in one nail row ($b_i$) of the second lines (B) through the nail (5) to a point which is at least at a distance equalling the nail thickness (T) from the nail rears (9) of the following nail row ($b_{i+1}$) in this line direction towards the said preceding nail row ($b_i$) and in each second row (b), the nail rears (9) are respectively mutually aligned along a line (b) placed in the middle of the distance (2*S1) formed in the manner described between two consecutive rows ($a_j$ and $a_{j+1}$) of the first rows, whereby both the first and the second rows (a, b) are at a point that fulfils the definition S1 = (S3-T)/2.

5. Connector plate assembly according to claim 2, in which in first (C) and second (D) lines parallel in the transverse direction of the nail plate (4 or 4'), the nails are bent in the same, first or second direction ($\alpha$, $\beta$), characterized in that the nails in the first lines (C) form first rows (c) transverse to the line direction (S4) and the nails in the second lines (D) form second rows (d) transverse to the line direction (S4) and that in each first row (c), the nail rears (9) are mutually aligned along a line (c) placed in the middle of the distance (2*S2) formed between the nail rears (9) in two consecutive rows ($d_j$ and $d_{j+1}$) of the second rows and in each second row (d) the nail rears (9) are respectively mutually aligned along a line placed in the middle of the distance formed between the nail rears (9) of two consecutive rows ($c_i$ and $c_{i+1}$) of the first rows, whereby both the first and the second rows (c, d) are at a point that fulfils the definition (S2 = S4/2).

6. Connector plate assembly according to any of the preceding claims, characterized in that the connector plate assembly (1) is formed of the said two nail plate members (4 and 4') by swinging nail plates having an identical nail positioning on top of each other with the first lines (A and A'; C and C') in matching alignment and the second lines (B and B'; D and D') in matching alignment, whereby the nails of the first lines (A-A'; C-C') mutually form the said nail pairs (8) and the nails of the second lines (B-B'; D-D') mutually form the said nail pairs (8).

7. Connector plate assembly according to claim 2, in which in first (E) and second (F) lines parallel in the transverse direction of the nail plate (4 or 4'), the nails are bent in the same, first or second direction ($\alpha$, $\beta$), characterized in that the nails in the first lines (E) form first rows (e) transverse to the line direction (S5, S6) and the nails in the second lines (F) form second rows (f) trasverse to the line direction (S5, S6), and in that in each first row (e), the nail rears (9) are aligned along a line placed at least essentially at a distance equalling the nail thickness (T) from the nail rear (9) of the second row (f) outwards from the nail and respectively, in each second row (f), the nail rears (9) are mutually aligned along a line, which is at least essentially at a distance equalling the nail thickness (T) from the rear (9) of the nails of the first row (e) in the direction of the nail thickness.

8. Connector plate assembly according to any of claims 1-3 or 7, **characterized** in that the connector plate assembly is formed of the said two nail plates (4, 4') by swinging nail plates having an identical nail positioning on top of each other with the first lines (E; K) in matching alignment with the second lines (F; L) and the second lines (F; L) in matching alignment with the first lines (E; K), whereby the nails of the first and the second lines (E-F'; K-L') together form the said nail pairs (8) and the nails of the first and second lines (E'-F; K'-L) respectively, together form the said nail pairs (8).

9. Connector plate assembly according to claim 1, **characterized** in that in the nail plates (4, 4'), the nails (5, 5') are shaped at the bending point (10, 10') to accomplish during the punching and bending step a plastic deformation, which widens the rooth portion (11,11') of the nail so that, the nails (5 and 5') of the nail pairs (8) passing through the mutually left openings (6' and respectively 6), the root portion (11, 11') of the penetrated nail is pressed between the opening sides (12), whereby two compression deformation areas (13) arise between the penetrated nail of each nail pair (8) and the respective opening sides, the deformation areas interlocking the said nail plates (4 and 4') undetachably into a connector plate assembly (1).

10. Connector plate assembly according to claim 9, characterized in that the said plastic deformation which widens the root portion (11, 11') of the nail (5, 5') is brought about by pressing in the nail plate (4, 4') blanks, at least at the point of the nails, before punching and bending of the nails, a curvature (40) projecting from the plane of the plate surface (7 and 14; 7' and 14'), the curvature being transverse to the length (N3) of the nail, whereby the bending of the nails causes the curvature dimension (41a) to straighten from the bending point (10, 10') into the respective straight dimension (41b), the expansion (43) being pressed between the sides (12) of the respective opening, thus forming two compression deformation areas (13) between the penetrated nail and the sides of the respective opening.

11. Connector plate assembly according to claim 1, 9 or 10, characterized in that in the nail plates (4, 4') the nails (5, 5') have a shape from the bending point (10, 10') towards the point that is sufficiently tapered or barbed or similar, whereby the openings (6,6') left by them in the nail plate are also tapered or shaped from the bending point on so that, the nails (5 and 5') of the nail pairs (8) passing through the mutually left openings (6' and respectively 6), the root portion (11, 11') of the penetrated nail or its expanded portion is pressed between the tapered or similar sides (12) of the opening, whereby two compression deformation areas (13) arise between the penetrated nail of each nail pair (8) and the sides of the respective opening, the deformation areas interlocking the said two nail plates (4 and 4') undetachably into a connector plate assembly (1).

12. Fire-safe butt joint (20) between two timbers formed of two wooden members (21, 22; 21', 22') or similar, by using a double-sided connector plate assembly (1) according to claim 1, which is formed of at least two essentially identical nail plates (4, 4') with the surfaces (7, 7') on the side of the nails (5, 5') facing each other, each nail plate comprising a plurality of longitudinally spaced nails (5, 5') projecting from the nailfree side (14, 14') of each plate (4, 4'), which nails point away from the plane of the plate (4, 4') and are formed by punching and bending from this plate, whereby the openings (6,6') left by the punching of the nails and the longitudinally spaced nails form nail lines (A, B; C, D; E, F; K, L) and there is a plurality of such transversely spaced (H1, H2; H3, H4; H5; H6) nail lines in the plate and all the nails in one plate point to the same side of the plane of the plate and of the two nail plates (4,4') of the connector plate assembly (1), the nails (5) of the first nail plate and the nails (5') of the second nail plate form nail pairs (8), whereby the wooden members are pressed in the connector plate perpendicularly to the plane of its surface, **characterized** in that the connector plate assembly extends to the side of the first timber (24) so that the wooden members (21, 22) forming the timber are pressed on both sides of the connector plate assembly, the nails (5, 5') being embedded by their entire length (N3) into these wooden members, and extends analogously to the side of the second timber (24') so that the wooden members (21', 22') forming the timber are pressed on both sides of the connector plate assembly, the nails (5,5') being embedded by their entire length (N3) in these wooden members and in that the ends (23 and 23') of the timbers (24, 24') abut on each other and the connector plate assembly extends from this point essentially equally far in the direction of each timber.

13. Butt joint according to claim 12, **characterized** in that the width of the connector plate assembly perpendicularly to the length and the ends (23, 23') of the timbers (24, 24') is smaller than the width of the timbers in this direction, the nail lines being preferably at least essentially parallel to the said length, and in that additional nail plates (4) have been pressed to each lateral surface (25, 26) of the timbers, the additional nail plates being preferably of the same type as the nail plate forming a part of the connector plate assembly used, and the nails (5) being embedded in the wooden members by their entire length (N3 + T).

14. Fixing tool with a double-sided connector plate assembly (1) according to claim 1, the assembly consisting of at least two essentially identical nail plates (4, 4') with the surfaces (7, 7') on the side of the nails (5,5') facing each other, each nail plate comprising a plurality of longitudinally spaced nails (5,5') projecting from the nailfree side (4,4') of each plate (4,4'), which nails point away from the plane of the plate (4,4') and have been formed by punching and bending from this plate, whereby the openings (6, 6') left by the punching of the nails and the longitudinally spaced nails form nail lines (A,B; C, D; E, F; K, L) and there is a plurality of such transversely spaced (H1, H2,; H3, H4; H5; H6) nail lines in the plate, and all the nails in one plate point to the same side of the plane of the plate and of the two nail plates (4,4') of the connector plate assembly (1), the nails (5) of the first nail plate and the nails (5') of the second nail plate form nail pairs (8), and when needed, also for fixing the connector plate corresponding to the nail plate of the connector plate assembly to the wooden members as an addition to the connector plate assembly, characterized in that the tool comprises at least one integral press member (30), one side (31) of which is formed by alternating ridges (32) and grooves (33), whereby the width (M2) of the ridges essentially equals or is somewhat smaller than the difference between the interspace (H1, H2, H3, H4, H5, H6) between the nail lines of the nail plate and the width (M1) of the root portion of the nail, whereby the ridges pass between the nail lines, and in that the width (M1) and depth (M3) of the groove are equal or greater than the width (N1) of the root portion of the nails and respectively the length (N3) of the nails as measured from the free nailfree surface (14, 14') of the connector plate assembly (1) on the side of these nails, whereby the nails of the nail plate (4,4') pass in these grooves as the two nail plates of the connector plate assembly are being pressed together.

15. Fixing tool according to claim 14, characterized in that the fixing tool consists of two press members (30 and 30') of the type described above, by means of which the nail plates are pressed from their nailfree sides (14 and 14'), with the surfaces (7 and 7') on the side of the nails facing each other, into contact with each other, whereby compression deformation areas (13) arise between the root portions (11,11') of the nails and the opeing sides (12), in order to interlock the nail plates undetachably so that a connector plate assembly (1) is formed.

**Patentansprüche**

1. Doppelseitige Verbinderplatte-Baugruppe (1) zum Verbinden von zumindest zwei im wesentlichen aus Holz bestehenden Teilen, wobei die Baugruppe aus zumindest zwei im wesentlichen identischen Nagelplatten (4, 4') besteht, wobei sich die Oberflächen (7, 7') auf der Seite der Nägel (5, 5') gegenüberstehen, wobei jede Nagelplatte eine Vielzahl von längsseits beabstandeten Nägeln (5, 5') hat, die aus der nagelfreien Seite (14, 14') jeder Platte (4, 4') hervorstehen, wobei die Nägel von der Ebene der Platte (4, 4') wegzeigen und durch Stanzen und Biegen aus dieser Platte ausgebildet worden sind, wodurch die Öffnungen (6, 6'), die durch das Stanzen der Nägel zurückgelassen wurden, und die längsseits beabstandeten Nägel Nägelzeilen (A, B; C, D; E, F; K, L) bilden und es eine Vielzahl von solchen quer beabstandeten (H1, H2; H3, H4; H5; H6) Nägelzeilen in der Platte gibt und wobei alle Nägel in einer Nagelplatte auf die gleiche Seite der Ebene der Platte zeigen und wobei von den zwei Nagelplatten (4, 4') der Verbinderplatte-Baugruppe (1) die Nägel (5) der ersten Nagelplatte und die Nägel (5') der zweiten Nagelplatte Nagelpaare (8) bilden, dadurch gekennzeichnet, daß sich die Nägel (5) der ersten Nagelplatte (4) durch die Öffnungen (6) erstrecken, die durch das Stanzen der Nägel (5') der zweiten Nagelplatte (4') zurückgelassen wurden, und sich analog dazu die Nägel (5') der zweiten Nagelplatte (4') durch die Öffnungen (6') erstrecken, die durch das Stanzen der Nägel (5) der ersten Nagelplatte (4) zurückgelassen wurden, und daß die Nägel (5 und 5') der ersten Nagelplatte und der zweiten Nagelplatte durch die gegenseitigen Öffnungen (6 und 6'), die durch das Stanzen zurückgelassen wurden, in entgegengesetzte Richtungen erstrecken, wobei sich die Rückseiten (9 und 9') der Nägel somit gegenüberstehen und zumindest im wesentlichen in der gleichen Ebene oder nahe zueinander sind.

2. Verbinderplatte-Baugruppe gemäß Anspruch 1, dadurch gekennzeichnet, daß in jeder Nagelzeile (A, B; C, D; E, F) die Nägel in derselben, ersten ($\alpha$) oder zweiten ($\beta$) Biegerichtung gebogen sind und daß die Zwischenräume (S3; S4; S5 und S6) zwischen den Rückseiten (9, 9') der Nägel vorzugsweise in jeder Nagelzeile gleich sind und/oder die querverlaufenden Zwischenräume (H1 und H2; H3 und H4; H5) zwischen den Nagelzeilen vorzugsweise gleich sind.

3. Verbinderplatte-Baugruppe gemäß Anspruch 1, dadurch gekennzeichnet, daß in jeder Nagelzeile (K, L) die Nägel (5) abwechselnd in der ersten ($\alpha$) und der zweiten ($\beta$) Richtung gebogen sind, wodurch in jeder Zeile die Zwischenräume zwischen den Rückseiten (9) der Nägel in der Richtung der Nagelzeilen (S7) periodisch abhängig von der Biegerichtung variieren oder gleich sind (S7) und/oder die querverlaufenden Zwischenräume (H6) zwischen den Nagelzeilen vorzugsweise gleich sind.

4. Verbinderplatte-Baugruppe gemäß Anspruch 2, bei der in der Querrichtung parallele Zeilen der Nagelplatte (4 oder 4') die Nägel abwechselnd in den ersten Zeilen (A) in einer ersten Richtung ($\alpha$) und in den zweiten Zeilen (B) in einer zweiten Richtung ($\beta$) gebogen haben, dadurch gekennzeichnet, daß die Nägel in den ersten Zeilen (A) erste Reihen (a) bilden, die quer zu der Zeilenrichtung (S3) sind, und daß die Nägel in den zweiten Zeilen (B) zweite Reihen (b) bilden, die quer zu der Zeilenrichtung (S3) sind, und daß in jeder ersten Reihe (a) die Nagelrückseiten (9) gegenseitig zueinander entlang einer Linie (a) ausgerichtet sind, die in der Mitte des Abstandes (2*S1) liegt, der zwischen zwei hintereinanderfolgenden Reihen der zweiten Reihen (b) ausgebildet ist, wobei der Abstand von den Nagelrückseiten (9) in einer Nagelreihe ($b_i$) der zweiten Zeilen (B) durch den Nagel (5) bis zu einem Punkt gemessen wird, der die zumindest in einem Abstand, der gleich der Nageldicke (T) ist, von den Nagelrückseiten (9) der nachfolgenden Nagelreihe ($b_{i+1}$) in dieser Zeilenrichtung in Richtung der vorhergehenden Nagelreihe ($b_i$) ist, und daß in jeder zweiten Reihe (b) die Nagelrückseiten (9) jeweils gegenseitig zueinander entlang einer Linie (b) ausgerichtet sind, die in der Mitte des Abstands (2*S1) liegt, der in der beschriebenen Weise zwischen zwei hintereinanderfolgenden Reihen ($a_j$ und $a_{j+1}$) der ersten Reihen ausgebildet ist, wodurch sowohl die ersten Reihen als auch die zweiten Reihen (a, b) an einer Stelle sind, die die Definition S1 = (S3-T)/2 erfüllt.

5. Verbinderplatte-Baugruppe gemäß Anspruch 2, bei der in ersten (C) und zweiten (D) Zeilen, die parallel in der Querrichtung der Nagelplatte (4 oder 4') sind, die Nägel in der gleichen ersten oder zweiten Richtung ($\alpha$, $\beta$) gebogen sind, dadurch gekennzeichnet, daß die Nägel in den ersten Zeilen (C) erste Reihen (C) bilden, die quer zu der Zeilenrichtung (S4) sind, daß die Nägel in den zweiten Zeilen (D) zweite Reihen (d) bilden, die quer zu der Zeilenrichtung (S4) sind, und daß in jeder ersten Reihe (c) die Nagelrückseiten (9) gegenseitig zueinander entlang einer Linie (c) ausgerichtet sind, die in der Mitte des Abstands (2*S2) liegt, der zwischen den Nagelrückseiten (9) in zwei hintereinanderfolgenden Reihen ($d_j$ und $d_{j+1}$) der zweiten Reihen ausgebildet ist, und daß in jeder zweiten Reihe (d) die Nagelrückseiten (9) jeweils gegenseitig zueinander entlang einer Linie ausgerichtet sind, die in der Mitte des Abstandes liegt, der zwischen den Nagelrückseiten (9) von zwei hintereinanderfolgenden Reihen ($c_i$ und $c_{i+1}$) der ersten Reihen ausgebildet ist, wodurch sowohl die ersten Reihen als auch die zweiten Reihen (c, d) an einer Stelle sind, die die Definition (S2 = S4/2) erfüllt.

6. Verbinderplatte-Baugruppe gemäß einem der vorhergehenden Ansprüche, dadurch gekennzeichnet, daß die Verbinderplatte-Baugruppe (1) aus den zwei Nagelplatten-Teilen (4 und 4') ausgebildet wird, indem Nagelplatten, die eine identische Nagelpositionierung haben, mit den ersten Zeilen (A und A'; C und C') in übereinstimmender Ausrichtung und den zweiten Zeilen (B und B'; D und D') in übereinstimmender Ausrichtung aufeinandergeklappt werden, wodurch die Nägel der ersten Zeilen (A-A'; C-C') gegenseitig die Nagelpaare (8) bilden und wodurch die Nägel der zweiten Zeilen (B-B'; D-D') gegenseitig die Nagelpaare (8) bilden.

7. Verbinderplatte-Baugruppe gemäß Anspruch 2, bei der in ersten (E) und in zweiten (F) Zeilen, die parallel in der Querrichtung der Nagelplatte (4 oder 4') sind, die Nägel in derselben ersten oder zweiten Richtung ($\alpha$, $\beta$) gebogen sind,

dadurch gekennzeichnet, daß die Nägel in den ersten Zeilen (E) die ersten Reihen (e) bilden, die quer zu der Zeilenrichtung (S5, S6) sind, und daß die Nägel in den zweiten Zeilen (F) die zweiten Reihen (f) bilden, die quer zu der Zeilenrichtung (S5, S6) sind, und daß in jeder ersten Reihe (e) die Nagelrückseiten (9) entlang einer Linie ausgerichtet sind, die zumindest im wesentlichen in einem Abstand, der gleich der Nageldicke (T) ist, von der Nagelrückseite (9) der zweiten Reihe (f) nach außen von dem Nagel liegt bzw. daß in jeder zweiten Reihe (f) die Nagelrückseiten (9) gegenseitig zueinander entlang einer Linie ausgerichtet sind, die zumindest im wesentlichen in einem Abstand, der gleich der Nageldicke (T) ist, von der Rückseite (9) der Nägel der ersten Reihe (e) in der Richtung der Nageldicke ist.

8. Verbinderplatte-Baugruppe gemäß einem der Ansprüche 1 bis 3 oder 7, dadurch gekennzeichnet, daß die Verbinderplatte-Baugruppe aus den zwei Nagelplatten (4, 4') ausgebildet wird, indem Nagelplatten, die eine identische Nagelpositionierung haben, mit den ersten Zeilen (E; K) in übereinstimmender Ausrichtung mit den zweiten Zeilen (F; L) und mit den zweiten Zeilen (F; L) in übereinstimmender Ausrichtung mit den ersten Zeilen (E; K) aufeinandergeklappt werden, wodurch die Nägel der ersten und zweiten Zeilen (E-F'; K-L') zusammen die Nagelpaare (8) bilden bzw. die Nägel der ersten und zweiten Zeilen (E'-F; K'-L) jeweils zusammen die Nagelpaare (8) bilden.

9. Verbinderplatte-Baugruppe gemäß Anspruch 1, dadurch gekennzeichnet, daß in den Nagelplatten (4, 4') die Nägel (5, 5') an der Biegestelle (10, 10') geformt sind, um während des Stanz-und-Biegeschritts eine plastische Deformierung zu erreichen, die den Wurzelabschnitt (11, 11') des Nagels derart weitet, daß die Nägel (5 und 5') der Nagelpaare (8) durch die gegenseitig zurückgelassenen Öffnungen (6' bzw. 6) hindurchgehen, daß der Wurzelabschnitt (11, 11') des eingedrungenen Nagels zwischen die Öffnungsseiten (12) gepreßt wird, wodurch zwei Kompressionsdeformierungsgebiete (13) zwischen dem eingedrungenen Nagel jedes Nagelpaares (8) und den jeweiligen Öffnungsseiten entstehen, wobei die Deformierungsgebiete die Nagelplatten (4 und 4') unlösbar in einer Verbinderplatte-Baugruppe (1) verriegeln.

10. Verbinderplatte-Baugruppe gemäß Anspruch 9, dadurch gekennzeichnet, daß die plastische Deformierung, die den Wurzelabschnitt (11, 11') des Nagels (5, 5') weitet, erzeugt wird, indem in der Nagelplatte (4, 4') Leerstellen, zumindest an der Stelle der Nägel, gepreßt werden, bevor die Nägel gestanzt und gebogen werden, und eine Krümmung (40), die aus der Ebene der Plattenoberfläche (7 und 14; 7' und 14') hervorsteht, erzeugt wird, wobei die Krümmung quer zur Länge (N3) des Nagels ist, wodurch es das Biegen der Nägel bewirkt, daß die Krümmungsabmessung (41a) von der Biegestelle (10, 10') aus in die jeweilige gerade Abmessung (41b) gestreckt wird, wobei die Ausdehnung (43) zwischen die Seiten (12) der jeweiligen Öffnung gepreßt wird, wodurch zwei Kompressionsdeformierungsgebiete (13) zwischen dem eingedrungenen Nagel und den Seiten der jeweiligen Öffnung ausgebildet werden.

11. Verbinderplatte-Baugruppe gemäß Anspruch 1, 9 oder 10, dadurch gekennzeichnet, daß in den Nagelplatten (4, 4') die Nägel (5, 5') eine Form von der Biegestelle (10, 10') in Richtung der Stelle haben, die ausreichend konisch oder mit Widerhaken versehen oder ähnlich ist, wodurch die Öffnungen (6, 6'), die von ihnen in der Nagelplatte zurückgelassen wurden, auch konisch oder von der Biegestelle aus derart geformt sind, daß die Nägel (5 und 5') der Nagelpaare (8) durch die gegenseitig zurückgelassenen Öffnungen (6' bzw. 6) hindurchgehen, wobei der Wurzelabschnitt (11, 11') des eingedrungenen Nagels oder sein ausgedehnter Abschnitt zwischen die konischen oder ähnlich ausgebildeten Seiten (12) der Öffnung gepreßt ist, wodurch zwei Kompressionsdeformierungsgebiete (13) zwischen dem eingedrungenen Nagel jedes Nagelpaares (8) und den Seiten der jeweiligen Öffnung entstehen, wobei die Deformierungsgebiete die zwei Nagelplatten (4 und 4') unlösbar in einer Verbinderplatte-Baugruppe (1) verriegeln.

12. Feuersicherer Stumpfstoß (20) zwischen zwei Balken, die aus zwei hölzernen Teilen (21, 22; 21', 22') oder ähnlichem bestehen, durch Verwendung einer doppelseitigen Verbinderplatte-Baugruppe (1) gemäß Anspruch 1, die aus zumindest zwei im wesentlichen identischen Nagelplatten (4, 4') ausgebildet ist, wobei sich die Oberflächen (7, 7') auf der Seite der Nägel (5, 5') gegenüberstehen, wobei jede Nagelplatte eine Vielzahl von längsseits beabstandeten Nägeln (5, 5') aufweist, die aus der nagelfreien Seite jeder Platte (4, 4') hervorstehen, wobei die Nägel von der Ebene der Platte (4, 4') wegzeigen und durch Stanzen und Biegen aus dieser Platte ausgebildet worden sind, wodurch die Öffnungen (6, 6'), die durch das Stanzen der Nägel zurückgelassen wurden, und die längsseits beabstandeten Nägel Nagelzeilen (A, B; C, D; E, F; K, L) bilden und es eine Vielzahl von solchen quer beabstandeten (H1, H2; H3, H4; H5; H6) Nagelzeilen in der Platte gibt und wobei alle Nägel in einer Platte auf die gleiche Seite der Ebene der Platte und der zwei Nagelplatten (4, 4') der Verbinderplatte-Baugruppe (1) zeigen, wobei die Nägel (5) der ersten Nagelplatte und die Nägel (5') der zweiten Nagelplatte Nagelpaare (8) bilden, wodurch die hölzernen Teile in der Verbinderplatte senkrecht zu der Ebene ihrer Oberfläche gepreßt werden, dadurch gekennzeichnet, daß die Verbinderplatte-Baugruppe sich auf der Seite des ersten Balkens (24) derart erstreckt, daß die hölzernen Teile (21, 22), die den Balken bilden, auf beiden Seiten der Verbinderplatte-Baugruppe gepreßt werden, wobei die Nägel (5, 5') in ihrer gesamten Länge (N3) in diese hölzernen Teile eingebettet sind, und sich analog auf der Seite des zweiten Balkens (24') derart erstreckt, daß die hölzernen Teile (21', 22'), die den Balken bilden, auf beiden Seiten der Verbinderplatte-Baugruppe gepreßt werden, wobei die Nägel (5, 5') in ihrer gesamten Länge (N3) in diesen hölzernen Teilen eingebettet sind, und daß die Enden (23 und 23') der Balken (24, 24') aufeinanderstoßen und die Verbinderplatte-Baugruppe sich von dieser Stelle aus im wesentlichen gleich weit in die Richtung jedes Balkens erstreckt.

13. Stumpfstoß gemäß Anspruch 12, dadurch gekennzeichnet, daß die Breite der Verbinderplatte-Baugruppe senkrecht zu der Länge der Enden (23, 23') der Balken (24, 24') kleiner ist als die Breite der Balken in dieser Richtung, wobei die Nagelzeilen vorzugsweise zumindest im wesentlichen parallel zu dieser Länge sind, und daß zusätzliche Nagelplatten (4) auf jede seitliche Oberfläche (25, 26) der Balken gepreßt worden sind, wobei die zusätzlichen Nagelplatten vorzugsweise vom gleichen Typ wie die Nagelplatte sind, die einen Teil der verwendeten Verbinderplatte-Baugruppe bildet, und daß die Nägel (5) in ihrer gesamten Länge (N3 + T) in die hölzernen Teile eingebettet sind.

14. Befestigungsvorrichtung mit einer doppelseitigen Verbinderplatte-Baugruppe (1) gemäß Anspruch 1, wobei die Baugruppe aus zumindest zwei im wesentlichen gleichen Nagelplatten (4, 4') besteht, wobei sich die Oberflächen (7, 7') auf der Seite der Nägel (5, 5') gegenüberstehen, wobei jede Nagelplatte eine Vielzahl von längsseits beabstandeten Nägeln (5, 5') aufweist, die aus der nagelfreien Seite (4, 4') jeder Platte (4, 4') hervorstehen, wobei die Nägel von der Ebene der Platte (4, 4') wegzeigen und durch Stanzen und Biegen aus dieser Platte ausgebildet worden sind, wodurch die Öffnungen (6, 6'), die durch Stanzen der Nägel zurückgelassen worden sind, und die längsseits beabstandeten Nägel Nagelzeilen (A, B; C, D; E, F; K, L) bilden und es eine Vielzahl von solchen quer beabstandeten (H1, H2; H3, H4; H5; H6) Nagelzeilen in der Platte gibt, und wobei alle Nägel in einer Nagelplatte auf die gleiche Seite der Ebene der Nagelplatte und der zwei Nagelplatten (4, 4') der Verbinderplatte-Baugruppe (1) zeigen, wobei die Nägel (5) der ersten Nagelplatte und die Nägel (5') der zweiten Nagelplatte Nagelpaare (8) bilden, und, wenn nötig, auch zum Befestigen der Verbinderplatte, die der Nagelplatte der Verbinderplatte-Baugruppe entspricht, an den hölzernen Teilen als Zusatz zu der Verbinderplatte-Baugruppe, dadurch gekennzeichnet, daß die Vorrichtung zumindest ein integrales Preßteil (30) aufweist, von dem eine Seite (31) durch abwechselnde Rippen (32) und Rillen (33) gebildet wird, wobei die Breite (M2) der Rippen im wesentlichen gleich oder etwas kleiner als der Unterschied zwischen dem Zwischenraum (H1, H2, H3, H4, H5, H6) zwischen den Nagelzeilen der Nagelplatte und der Breite (M1) des Wurzelabschnitts des Nagels ist, wodurch die Rippen zwischen die Nagelzeilen hineinpassen, und daß die Breite (M1) und die Tiefe (M3) der Rille gleich oder größer als die Breite (N1) des Wurzelabschnitts der bzw. der Länge (N3) der Nägel sind, gemessen von der freien nagelfreien Oberfläche (14, 14') der Verbinderplatte-Baugruppe (1) auf der Seite dieser Nägel, wodurch die Nägel der Nagelplatte (4, 4') in diese Rillen hineinpassen, wenn die zwei Nagelplatten der Verbinderplatte-Baugruppe zusammengepreßt werden.

15. Befestigungsvorrichtung gemäß Anspruch 14, dadurch gekennzeichnet, daß die Befestigungsvorrichtung aus zwei Preßteilen (30 und 30') des oben beschriebenen Typs besteht, mittels derer die Nagelplatten von ihren nagelfreien Seiten (14 und 14') aus zusammengepreßt werden, wobei die Oberflächen (7 und 7') auf der Seite der Nägel sich gegenüberstehen, und zwar in Berührung miteinander, wodurch Kompressionsdeformierungsgebiete (13) zwischen den Wurzelabschnitten (11, 11') der Nägel und den Öffnungsseiten (12) entstehen, um die Nagelplatten unlösbar derart miteinander zu verriegeln, daß eine Verbinderplatte-Baugruppe (1) ausgebildet wird.

## Revendications

1. Structure (1) de plaques de connexion doubleface destinée à joindre au moins deux éléments essentiellement en bois, cette structure étant constituée d'au moins deux plaques (4, 4') à clous pratiquement identiques dont les surfaces (7, 7') du côté des clous (5, 5') se font face l'une à l'autre, chaque plaque à clous comprenant une pluralité de clous (5, 5') à distance longitudinalement et faisant saillie du côté (14, 14') qui n'a pas de clous de chaque plaque (4, 4'), ces clous s'éloignant du plan de la plaque (4, 4') et ayant été formés par poinçonnage et par pliage à partir de cette plaque, de manière que les ouvertures (6, 6') laissées par le poinçonnage des clous et les clous à distance les uns des autres longitudinalement forment des lignes de clous (A, B ; C, D ; E, F ; K, L) et qu'il y ait une pluralité de telles lignes de clous (H1, H2 ; H3, H4 ; H5, H6) à distance les unes des autres transversalement dans la plaque et que tous les clous dans une plaque à clous pointent vers le même côté du plan de la plaque et des deux plaques à clous (4, 4') de la structure (1) de plaques de connexion, les clous (5) de la première plaque à clous et les clous (5') de la seconde plaque à clous formant des paires (8) de clous, caractérisée en ce que les clous (5) de la première plaque à clous (4) passent dans les ouvertures (6) laissées par le poinçonnage des clous (5') de la seconde plaque (4') à clous et de manière analogue, les clous (5') de la seconde plaque à clous (4') passent dans les ouvertures (6') laissées par le poinçonnage des clous (5) de la première plaque à clous (4), et en ce que les clous (5 et 5') des première et seconde plaques à clous passent dans les ouvertures (6 et 6') mutuelles laissées par le poinçonnage dans des sens opposés, dans lesquelles les arrières (9 et 9') des clous se font face l'un l'autre et sont au moins sensiblement dans le même plan ou proches l'un de l'autre.

2. Structure de plaques de connexion selon la revendication 1, caractérisée en ce que dans chaque ligne de clous (A, B ; C, D ; E, F) les clous sont pliés selon la même première ($\alpha$) ou seconde ($\beta$) direction de pliage, en ce que les intervalles (S3 ; S4 ; S5 et S6) entre les arrières (9, 9') des clous sont de préférence égaux dans chaque ligne de clous et/ou les intervalles transversaux (H1 et H2 ; H3 et H4; H5) entre les lignes de clous sont de préférence égaux.

3. Structure de plaques de connexion selon la revendication 1, caractérisée en ce que dans chaque ligne de clous (K, L), les clous (5) sont alternativement pliés selon la première (α) et la seconde (β) direction, de sorte que dans chaque ligne, les intervalles entre les arrières (9) des clous dans la direction des lignes (S7) de clous varient périodiquement selon la direction de pliage ou sont égaux (S7), et/ou les intervalles transversaux (H6) entre les lignes de clous sont de préférence égaux.

4. Structure de plaques de connexion selon la revendication 2, dans laquelle, dans les directions transversales, des lignes parallèles de la plaque (4, 4') à clous, ont les clous pliés alternativement dans les premières lignes (A) selon une première direction (α) et dans les secondes lignes (B) selon une seconde direction (β), caractérisée en ce que les clous dans les premières lignes (A) constituent des premières rangées (a) transversales à la direction (S3) de la ligne et les clous dans les secondes lignes (B) constituent des secondes rangées (b) transversales à la direction (S3) de la ligne et en ce que dans chaque premières rangées (a), les arrières des clous (9) sont alignés mutuellement le long d'une ligne (a), qui se trouve au milieu de la distance (2xS1) entre deux rangées consécutives de secondes rangées (b), la distance étant mesurée à partir des arrières (9) de clous dans une rangée de clous (b;) des secondes lignes (B) le long du clou (5) jusqu'à un point qui est au moins à une distance égale à l'épaisseur (T) de clou des arrières (9) des clous de la rangée (b$_{i-1}$) de clou suivante selon la direction de ligne à la rangée de clou précédente (b$_i$) et dans chaque seconde rangée (b), les arrières de clou (9) sont respectivement alignés mutuellement le long d'une ligne (b) qui se trouve au milieu de la distance (2xS1), calculée de la manière décrite précédemment, entre deux rangées consécutives (a$_i$ et a$_{i+1}$) des premières rangées, de sorte que les deux première et seconde rangées (a et b) sont en un point qui remplit la condition : S1 = (S3 -T)/2.

5. Structure de plaques de connexion selon la revendication 2, dans laquelle dans les premières (C) et secondes (D) lignes parallèles dans la direction transversale de la plaque (4 ou 4') à clous, les clous sont pliés selon la même, première ou seconde direction (α , β), caractérisée en ce que les clous des premières lignes (C) constituent des premières rangées (c) transversales à la direction de la ligne (S4) et les clous des secondes lignes (D) constituent des secondes rangées (d) transversales à la direction de ligne (S4) et en ce que dans chaque première rangée (c), les arrières (9) de clous sont alignés mutuellement le long d'une ligne (c) qui se trouve au milieu de la distance (2xS2) entre les arrières (9) de clous dans deux rangées consécutives (d$_i$ et d$_{i+1}$) des secondes rangées et dans chaque seconde rangée (d) les arrières (9) de clous sont respectivement alignés mutuellement le long d'une ligne qui se trouve au milieu de la distance entre les arrières (9) de clous de deux rangée consécutives (c$_i$ et c$_{i+1}$) des premières rangées, de sorte que les premières et secondes rangées (c et d) sont situées en un point qui remplit la condition (S2 = S4/2).

6. Structure de plaques de connexion selon l'une quelconque des revendications précédentes, caractérisée en ce que la structure de plaques de connexion (1) est formée desdits deux éléments formant plaque à clou (4 et 4') en mettant les plaques à clou, dans lesquelles les clous sont placés de manière identique, l'une sur l'autre les premières lignes (A et A'; C et C') étant alignées et les secondes lignes (B et B'; D et D') étant alignées, les clous des premières lignes (A-A' ; C-C') formant ainsi mutuellement les paires (8) de clous et les clous des secondes lignes (B-B' ; D-D') formant ainsi mutuellement les paires (8) de clous.

7. Structure de plaques de connexion selon la revendication 2, dans laquelle dans les premières (E) et secondes (F) lignes parallèles dans la direction transversale de la plaque (4) ou (4') à clous, les clous sont pliés selon la même première ou seconde direction (α , β), caractérisée en ce que les clous des premières lignes (E) constituent des premières rangées (e) transversales à la direction de la ligne (S5, S6) et les clous des secondes lignes (F) constituent des secondes rangées (f) transversales à la direction de ligne (S5, S6) et en ce que dans chaque première rangée (e), les arrières (9) de clous sont alignés le long d'une ligne qui se trouve au moins sensiblement à une distance égale à l'épaisseur (T) de clou en allant de l'arrière (9) des clous de la seconde rangée (f) dirigée vers l'extérieur du clou et respectivement, dans chaque seconde rangée (f), les arrières (9) de clous sont alignés mutuellement le long d'une ligne, qui se trouve à une distance au moins sensiblement égale à l'épaisseur (T) de clou de l'arrière (9) des clous de la première rangée (e) dans la direction de l'épaisseur de clou.

**8.** Structure de plaques de connexion selon l'une quelconque des revendications 1 à 3 ou 7, caractérisée en ce que la structure de plaque de connexion est formée à partir des deux plaques à clous (4 et 4') en plaçant les plaques à clous qui ont un positionnement de clous identique l'une sur l'autre avec les premières lignes (E ; K) alignées avec les secondes lignes (F ; L) et les secondes lignes (F ; L) alignées avec les premières lignes (E ; K), de sorte que les clous des premières et secondes lignes (E-F' ; K-L') forment ensemble les paires (8) de clous et les clous des premières et secondes lignes (E'-F ; K'-L) respectivement, forment ensemble les paires (8) de clous.

**9.** Structure de plaques de connexion selon la revendication 1, caractérisée en ce que dans les plaques à clous (4, 4'), les clous (5, 5') ont une forme au point de pliage (10, 10') telle qu'une déformation plastique peut avoir lieu lors des étapes de poinçonnage et de pliage, qui a pour effet d'élargir la partie racine (11, 11') des clous de façon que, les clous (5 et 5') des paires (8) de clous passant au travers des ouvertures laissées mutuellement (6' et respectivement 6), la partie racine (11, 11') du clou qui a pénétré est pressée entre les côtés (12) d'ouverture, deux zones (13) de déformation dues à la compression apparaissant ainsi entre le clou ayant pénétré de chaque paire (8) de clous et les côtés d'ouverture respectifs, les zones de déformation bloquant les plaques (4 et 4') à clous de manière inamovible pour en faire une structure (1) de plaques de connexion.

**10.** Structure de plaques de connexion selon la revendication 9, caractérisée en ce que la déformation plastique qui élargit la partie racine (11, 11') du clou (5, 5') est provoquée en ménageant par pression dans les ébauches des plaques à clous (4, 4'), au moins en un point des clous, avant le poinçonnage et le pliage des clous, une courbure (40) faisant saillie du plan de la surface de plaque (7 et 14 ; 7' et 14'), la courbure étant transversale à la longueur (N3) du clou, le pliage des clous faisant que la partie incurvée (41a) se redresse à partir du point de pliage (10, 10') pour devenir droite (41b), la partie élargie (43) étant pressée entre les côtés (12) de l'ouverture correspondante, formant ainsi deux zones (13) de déformation de compression entre le clou ayant pénétré et les côtés de l'ouverture correspondante.

**11.** Structure de plaques de connexion selon la revendication 1, 9 ou 10, caractérisée en ce que dans les plaques à clous (4, 4') les clous (5, 5') ont, à partir du point de pliage (10, 10'), une forme, en direction du point, qui est suffisamment conique ou barbelée ou analogue, de sorte que les ouvertures (6, 6') laissées par les clous dans la plaque à clous sont également coniques ou conformées à partir du point de pliage de telle sorte que, les clous (5 et 5') des paires (8) de clous passant dans les ouvertures laissées mutuellement (6' et respectivement 6), la partie racine (11, 11') du clou ayant pénétré ou sa partie élargie est pressée entre les côtés (12) coniques ou analogues de l'ouverture, deux zones (13) de déformation par compression apparaissant alors entre le clou ayant pénétré de chaque paire (8) de clous et les côtés de l'ouverture respective, les zones de déformation bloquant les deux plaques (4 et 4') à clous de manière inamovible pour en faire une structure (1) de plaque de connexion.

**12.** Joint bout à bout (20) à l'épreuve du feu entre deux poutres formées de deux membrures en bois (21, 22 ; 21', 22') ou analogues, en utilisant une structure (1) de plaque de connexion double-face selon la revendication 1, qui est formé d'au moins deux plaques (4, 4') à clous sensiblement identiques, les surfaces (7, 7') du côté des clous (5, 5') se faisant face l'une à l'autre, chaque plaque à clous comprenant une pluralité de clous (5, 5') à distance les uns des autres longitudinalement et faisant saillie du côté qui n'a pas de clous (14, 14') de chaque plaque (4, 4'), ces clous pointant en s'éloignant du plan de la plaque (4, 4') et étant formés par poinçonnage et pliage à partir de cette plaque, les ouvertures (6, 6') laissées par le poinçonnage des clous et les clous à distance les uns des autres longitudinalement formant des lignes de clous (A, B ; C, D ; E, F ; K, L) et il y a une pluralité de telles lignes de clous transversalement à distance les unes des autres (H1, H2 ; H3, H4 ; H5 ; H6) dans la plaque et tous les clous dans une plaque pointent vers le même côté du plan de la plaque et des deux plaques à clous (4, 4') de la structure (1) de plaque de connexion, les clous (5) de la première plaque à clous et les clous (5') de la seconde plaque à clous formant une paire (8) de clous, les membrures en bois étant alors comprimés dans la plaque de connexion perpendiculairement au plan de sa surface, caractérisé en ce que la structure de plaque de connexion s'étend vers le côté de la première poutre (24) de manière que les membrures en bois (21, 22) formant la poutre sont comprimées des deux côtés de la plaque de connexion, les clous (5, 5') étant enfouis sur toute leur longueur (N3) dans ces membrures en bois, et de manière analogue en ce que la structure de plaque de connexion s'étend vers le côté de la seconde poutre (24') de manière que la membrure en bois (21', 22') formant la poutre est pressée des deux côtés de la structure de plaque de connexion, les clous (5, 5') étant enfouis sur toute leur longueur (N3) dans ces membrures en bois et en ce que les extrémités (23 et 23') des poutres (24 et 24') viennent bout-à-bout et la structure de plaques de connexion s'étend à partir de ce point sensiblement aussi loin dans la direction de chaque poutre.

13. Joint bout à bout selon la revendication 12, caractérisé en ce que la largeur de la structure de plaques de connexion perpendiculairement à la longueur et aux extrémités (23, 23') des poutres (24, 24') est plus petite que la largeur des poutres selon cette direction, les lignes de clous étant de préférence au moins sensiblement parallèle à ladite longueur, et en ce que des plaques à clous supplémentaires (4) ont été pressées contre chaque surface latérale (25, 26) des poutres, les plaques à clous supplémentaires étant de préférence du même type que la plaque à clous formant partie de la structure de plaque de connexion utilisée, et les clous (5) étant enfouis dans les membrures en bois sur toute leur longueur (N3 + T).

14. Outil de fixation ayant une structure (1) de plaques de connexion double-face selon la revendication 1, la structure consistant en au moins deux plaques (4, 4') à clous sensiblement identiques dont les surfaces (7, 7') du côté des clous (5, 5') se font face l'une à l'autre, chaque plaque à clous comprenant une pluralité de clous (5, 5') à distance les uns des autres longitudinalement et faisant saillie du côté qui n'a pas de clous (14, 14') de chaque plaque (4' 4'), ces clous pointant en s'éloignant du plan de la plaque (4, 4') et ayant été formés par poinçonnage et pliage à partir de la plaque, les ouvertures (6, 6') laissées par le poinçonnage des clous et les clous à distance longitudinalement les uns des autres formant des lignes de clous (A, B ; C, D ; E, F ; K ; L), et une pluralité de lignes de clous de ce type étant transversalement à distance les unes des autres (H1, H2 ; H3, H4 ; H5 ; H6) dans la plaque, et tous les clous dans une plaque pointant vers le même côté du plan de la plaque et des deux plaques à clous (4, 4') de la structure (1) de plaques de connexion, les clous (5) de la première plaque à clous et les clous (5') de la seconde plaque à clous formant des paires (8) de clous et, lorsque nécessaire, cette structure servant aussi à fixer la plaque de connexion correspondant à la plaque à clous de la structure de plaques de connexion aux membrures en bois en tant que supplément à la structure de plaques de connexion, caractérisé en ce que l'outil comprend au moins un élément (30) de pressage d'un seul tenant, dont l'un des côtés (31) est formé de sillons (32) et rainures (33) alternés, la largeur (M2) des sillons étant sensiblement égale ou légèrement inférieure à la différence entre les intervalles (H1, H2, H3, H4, H5, H6) entre les lignes de clous de la plaque à clous et la largeur (M1) de la partie racine du clou, les sillons passant entre les lignes de clou, et en ce que la largeur (M1) et la profondeur (M3) des rainures sont égales ou supérieures à la largeur (N1) de la partie racine des clous et respectivement à la longueur (N3) des clous telles que mesurées à partir de la surface libre n'ayant pas de clous (14, 14') de la structure (1) de plaques de connexion du côté de ces clous, les clous de ces plaques à clous (4, 4') passant dans ces rainures lorsque les deux plaques à clous de la structure de plaques de connexion sont pressées l'une contre l'autre.

15. Outil de fixation selon la revendication 14, caractérisé en ce que l'outil de fixation consiste en deux éléments de pressage (30 et 30') du type décrit ci-dessus, au moyen desquels les plaques à clous sont pressées par leur côté qui n'ont pas de clous (14 et 14'), lorsque les surfaces (7 et 7') du côté des clous se font face l'une à l'autre, l'une contre l'autre, des zones (13) de déformation par compression apparaissant entre les parties racine (11, 11') des clous et les côtés (12) des ouvertures, de manière à bloquer les plaques à clous de façon inamovible afin de former une structure (1) de plaques de connexion.

Fig.1a

Fig.1b

Fig.2

Fig.3a

Fig.3b

Fig.4

Fig.5

Fig.6

Fig.7

Fig.8

Fig.9

Fig.10

23

Fig.11

Fig.12

Fig.13

Fig.14

Fig.15

Fig.16